# EUROPÄISCHE PATENTANMELDUNG

(11) **EP 2 801 434 A2**
(43) Veröffentlichungstag der Anmeldung: **12.11.2014**
(21) Anmeldenummer: 14165585.2
(22) Anmeldetag: 23.04.2014
(51) Int. Cl.: B23K 33/00, B23K 31/02

(54) **Verfahren zum Verbinden mehrerer Tankelemente und Tankvorrichtung**

(30) Priorität: 08.05.2013 DE 102013208467
(71) Anmelder: Deutsches Zentrum für Luft- und Raumfahrt e.V., 51147 Köln (DE)
(72) Erfinder: Schierle, Diego, 70190 Stuttgart (DE); Kobilke, Alexander, 70565 Stuttgart (DE); Straßburger, Philipp, 70193 Stuttgart (DE); Schöll, Roland, 71034 Böblingen (DE)
(74) Vertreter: Hoeger, Stellrecht & Partner Patentanwälte

(57) **Zusammenfassung**

Um ein Verfahren zum Verbinden mehrerer Tankelemente zu schaffen, mittels welchem mehrere Tankelemente stabil miteinander verbunden und somit insbesondere eine sichere und stabile Tankvorrichtung bereitgestellt werden kann, wird vorgeschlagen, dass das Verfahren Folgendes umfasst: Bereitstellen mehrerer Tankelemente, mehrerer Anbindungselemente und einer Adaptervorrichtung zur fluidwirksamen Verbindung von Innenräumen der Tankelemente, wobei die Anbindungselemente jeweils eine von zwei Endkappen eines Tankelements bilden; Anordnen der Anbindungselemente an der Adaptervorrichtung mittels einer stoffschlüssigen und/oder formschlüssigen Verbindung.

## Beschreibung

Die vorliegende Erfindung betrifft ein Verfahren zum Verbinden mehrerer Tankelemente.

Tankelemente können beispielsweise mittels Ventilen und Leitungen miteinander verbunden werden.

Der vorliegenden Erfindung liegt die Aufgabe zugrunde, mehrere Tankelemente stabil miteinander zu verbinden und somit insbesondere eine sichere und stabile Tankvorrichtung bereitzustellen.

Diese Aufgabe wird erfindungsgemäß durch ein Verfahren zum Verbinden mehrerer Tankelemente gelöst, welches Folgendes umfasst:
Bereitstellen mehrerer Tankelemente, mehrerer Anbindungselemente und einer Adaptervorrichtung zur fluidwirksamen Verbindung von Innenräumen der Tankelemente, wobei die Anbindungselemente jeweils eine von zwei Endkappen eines Tankelements bilden;
Anordnen der Anbindungselemente an der Adaptervorrichtung mittels einer stoffschlüssigen und/oder formschlüssigen Verbindung.

Dadurch, dass erfindungsgemäß mehrere Tankelemente mittels Anbindungselementen und einer stoffschlüssigen und/oder formschlüssigen Verbindung an einer Adaptervorrichtung angeordnet werden, kann eine besonders stabile Verbindung zwischen den Tankelementen und somit eine sichere und stabile Tankvorrichtung bereitgestellt werden.

Günstig kann es sein, wenn die Anbindungselemente in Öffnungen der Adaptervorrichtung eingeführt und dann mit der Adaptervorrichtung verbunden werden.

Es kann vorgesehen sein, dass die Anbindungselemente mit der Adaptervorrichtung verschweißt werden.

Alternativ oder ergänzend hierzu kann vorgesehen sein, dass die Anbindungselemente durch ein Expansionsumformverfahren mit der Adaptervorrichtung verbunden werden.

Insbesondere kann vorgesehen sein, dass die Anbindungselemente durch ein elektromagnetisches Pulsumformverfahren mit der Adaptervorrichtung verbunden werden.

Mittels eines elektromagnetischen Pulsumformverfahrens, insbesondere mittels der elektromagnetischen Pulsumformtechnologie (EMPT), ist vorzugsweise eine stoffschlüssige Verbindung metallischer Komponenten ohne Zuführung von thermischer Energie möglich.

Beispielsweise wird mittels eines gepulsten, hochenergetischen Magnetfelds eine gezielte Beschleunigung, insbesondere ein gezieltes Ausdehnen, mindestens eines der zu verbindenden Bauteile erzeugt.

Vorzugsweise erfolgt eine stoffschlüssige Verbindung der Bauteile durch den Aufbau einer metallischen Bindung.

Es kann vorgesehen sein, dass jeweils ein Anbindungselement in jeweils eine Öffnung der Adaptervorrichtung eingeführt wird. Ein Expansionselement einer Umformvorrichtung wird vorzugsweise in einen Innenraum des Anbindungselements eingeführt, so dass das Expansionselement in einem Überlappungsbereich der Adaptervorrichtung und des Anbindungselements bezüglich einer Einführrichtung in radialer Richtung sowohl von dem Anbindungselement als auch von der Adaptervorrichtung umgeben ist. Mittels des Expansionselements wird das Anbindungselement vorzugsweise expandiert und hierdurch an der Adaptervorrichtung festgelegt.

Das Expansionselement ist insbesondere eine Expansionsspule, insbesondere zur Durchführung des elektromagnetischen Pulsumformverfahrens.

Günstig kann es sein, wenn mehrere Tankelemente einer Adapterplatte der Adaptervorrichtung zugeordnet werden und sämtliche dieser Tankelemente auf einer einzigen Seite der Adapterplatte der Adaptervorrichtung angeordnet werden.

Insbesondere kann vorgesehen sein, dass zwei Adapterplatten der Adaptervorrichtung jeweils einseitig mit mehreren Tankelemente versehen werden und dass die Adapterplatten an ihren den Tankelementen abgewandten Seiten miteinander verbunden werden.

Günstig kann es sein, wenn die Tankelemente auf einander gegenüberliegenden Seiten der Adaptervorrichtung angeordnet werden.

Die Tankelemente werden vorzugsweise bereitgestellt durch:
Bereitstellen eines hohlzylindrischen Abschnitts und zweier Endkappen, wobei eine Endkappe als ein Anbindungselement ausgebildet ist;
Verbinden, insbesondere Verschweißen, des hohlzylindrischen Abschnitts, der Endkappe und des Anbindungselements miteinander.

Insbesondere werden der hohlzylindrische Abschnitt, die Endkappe und das Anbindungselement fluiddicht miteinander verbunden.

Der hohlzylindrische Abschnitt, die Endkappe und/oder das Anbindungselement werden vorzugsweise nach dem Verbinden derselben miteinander mit einem Fasermaterial umgeben, insbesondere umflochten und/oder umwickelt. Es kann vorgesehen sein, dass das Fasermaterial mit einem Matrixmaterial versehen, insbesondere benetzt und/oder getränkt, wird.

Die Tankelemente werden vorzugsweise derart nebeneinander angeordnet, dass die Mittelachsen von hohlzylindrischen Abschnitten der Tankelemente im Wesentlichen parallel zueinander sind.

Die mittels der Adaptervorrichtung miteinander verbundenen Tankelemente bilden vorzugsweise Wickelelemente eines Wickelkerns, welche mittels einer Wickelvorrichtung mit mindestens einer Faser umwickelt werden.

Zum Umwickeln der Tankelemente wird die mindestens eine Faser vorzugsweise zwischen den Tankelemente hindurch- und/oder um die Tankelemente herumgeführt.

Mittels des erfindungsgemäßen Verfahrens kann insbesondere eine Tankvorrichtung bereitgestellt werden.

Die vorliegende Erfindung betrifft ferner eine Tankvorrichtung, welche mehrere Tankelemente umfasst.

Der Erfindung liegt diesbezüglich die Aufgabe zugrunde, eine Tankvorrichtung bereitzustellen, welche mehrere stabil miteinander verbundene Tankelemente umfasst und somit sicher und stabil ausgebildet ist.

Diese Aufgabe wird erfindungsgemäß durch eine Tankvorrichtung gelöst, welche mehrere Tankelemente, mehrere Anbindungselemente und eine Adaptervorrichtung zur fluidwirksamen Verbindung von Innenräumen der Tankelemente umfasst, wobei die Anbindungselemente jeweils eine von zwei Endkappen eines Tankelements bilden und mittels einer stoffschlüssigen und/oder formschlüssigen Verbindung an der Adaptervorrichtung angeordnet sind.

Die erfindungsgemäße Tankvorrichtung weist vorzugsweise einzelne oder mehrere der im Zusammenhang mit dem erfindungsgemäßen Verfahren beschriebenen Merkmale und/oder Vorteile auf.

Insbesondere kann vorgesehen sein, dass die Anbindungselemente die Innenräume der Tankelemente mit Verbindungskanälen der Adaptervorrichtung fluidwirksam verbinden.

Bei einer Ausgestaltung der Erfindung kann vorgesehen sein, dass die Anbindungselemente eine variierende Materialstärke aufweisen, wobei die Materialstärke an einem der Adaptervorrichtung zugewandten Ende der Anbindungselemente größer oder stärker ist als die Materialstärke an einem der Adaptervorrichtung abgewandten Ende der Anbindungselemente.

Günstig kann es sein, wenn die hohlzylindrischen Abschnitte eine fluiddichte Innenschale und eine faserverstärkte Außenschale umfassen.

Mittels der Adaptervorrichtung sind vorzugsweise die Innenräume sämtlicher Tankelemente fluidwirksam miteinander verbunden.

Ferner können das erfindungsgemäße Verfahren und/oder die erfindungsgemäße Tankvorrichtung einzelne oder mehrere der nachfolgend beschriebenen Merkmale und/oder Vorteile aufweisen:
Die Adaptervorrichtung ist vorzugsweise eine Zentraleinheit und/oder ein Schnittstellenelement zur Verbindung sämtlicher Tankelemente und/oder zur zentralen Anbindung sämtlicher Tankelemente an einen Verbraucher.

Durch die Verbindung der Anbindungselemente mit der Adaptervorrichtung werden vorzugsweise auch die Tankelemente relativ zueinander fixiert und verdrehsicher positioniert. Hierdurch sind die Tankelemente insbesondere zur Durchführung eines anschließenden Wickelvorganges optimal positioniert und/oder ausgerichtet.

Die Anbindungselemente sind vorzugsweise aus einer Aluminiumlegierung gebildet. Auf diese Weise ist das elektromagnetische Pulsumformverfahren besonders effizient durchführbar.

Vorzugsweise ist ein Abschnitt eines jeden Anbindungselements, in welchem dieses an der Adaptervorrichtung angeordnet ist, verjüngt ausgebildet und weist insbesondere eine im Vergleich zur Innenquerschnittsfläche des hohlzylindrischen Abschnitts kleine Innenquerschnittsfläche auf. Beispielsweise ist die Innenquerschnittsfläche in diesem Bereich des Anbindungselements höchstens ungefähr ein Viertel der Innenquerschnittsfläche des hohlzylindrischen Abschnitts.

Durch eine reduzierte Innenquerschnittsfläche des Anbindungselements im Bereich der Anbindung an die Adaptervorrichtung kann vorzugsweise eine in diesem Bereich aufgrund des Drucks in den Tankelementen wirkende Kraft reduziert werden. Ferner können vorzugsweise Haltekräfte verringert werden. Schließlich kann hierdurch auch eine Reduktion von Spannungen innerhalb der Adaptervorrichtung erzielt werden.

Die Tankvorrichtung eignet sich insbesondere zur Erdgasspeicherung in der Automobilindustrie, zum Einsatz in Feuerlöschsystemen und/oder zum Transport von Fluiden jeglicher Art, insbesondere zum Transport von unter Druck stehenden Gasen.

Alternativ zu den beschriebenen Schweißverbindungen können auch Lötverbindungen vorgesehen sein.

Weitere bevorzugte Merkmale und/oder Vorteile sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer Ausführungsform einer Tankvorrichtung, bei welcher jeweils neun Tankelemente mit jeweils einer Adapterplatte einer Adaptervorrichtung verschweißt sind;
- Fig. 2: einen schematischen Querschnitt durch neun Tankelemente der Tankvorrichtung aus Fig. 1;
- Fig. 3: eine schematische perspektivische Explosionsdarstellung eines Tankelements und einer Adapterplatte der Tankvorrichtung aus Fig. 1;
- Fig. 4: eine vergrößerte geschnittene Darstellung eines an einer Adapterplatte angeordneten Anbindungselements eines Tankelements;
- Fig. 5: einen schematischen Längsschnitt durch ein an der Adapterplatte angeordnetes Tankelement;
- Fig. 6: eine schematische Schnittdarstellung durch eine zweite Ausführungsform einer Tankvorrichtung, bei welcher die Tankelemente mittels eines elektromagnetischen Pulsumformverfahrens an der Adapterplatte der Adaptervorrichtung festgelegt werden;
- Fig. 7: eine vergrößerte Darstellung des Bereichs VII aus Fig. 6, wobei das Anbindungselement und die Adapterplatte in einem unverbundenen Zustand vorliegen und ein Expansionselement einer Umformvorrichtung in einen von dem Anbindungselement und der Adapterplatte umgebenen Innenraum eingeführt ist; und
- Fig. 8: eine der Fig. 7 entsprechende schematische Schnittdarstellung, wobei das Anbindungselement mittels des Expansionselements der Umformvorrichtung umgeformt und mit der Adapterplatte verbunden wurde.

Gleiche oder funktional äquivalente Elemente sind in sämtlichen Figuren mit denselben Bezugszeichen versehen.

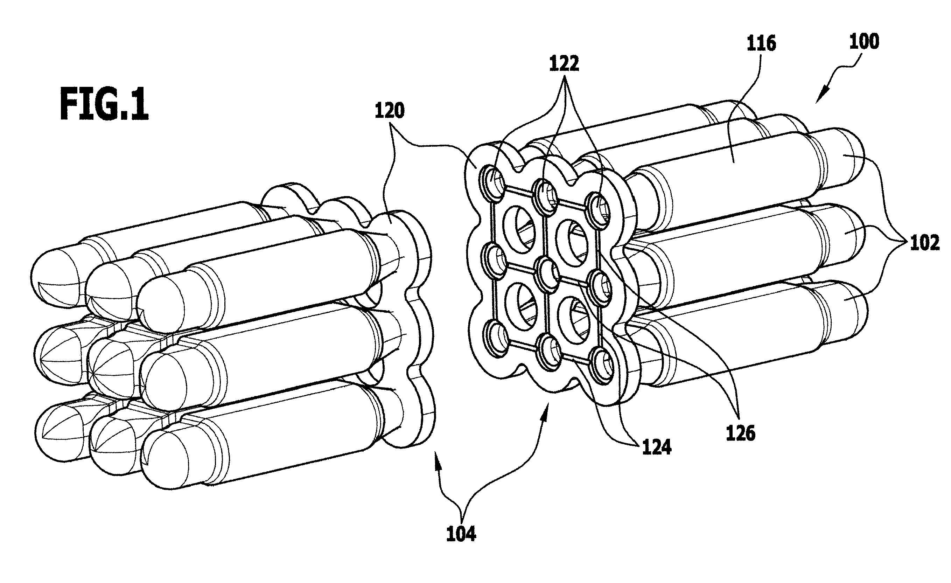

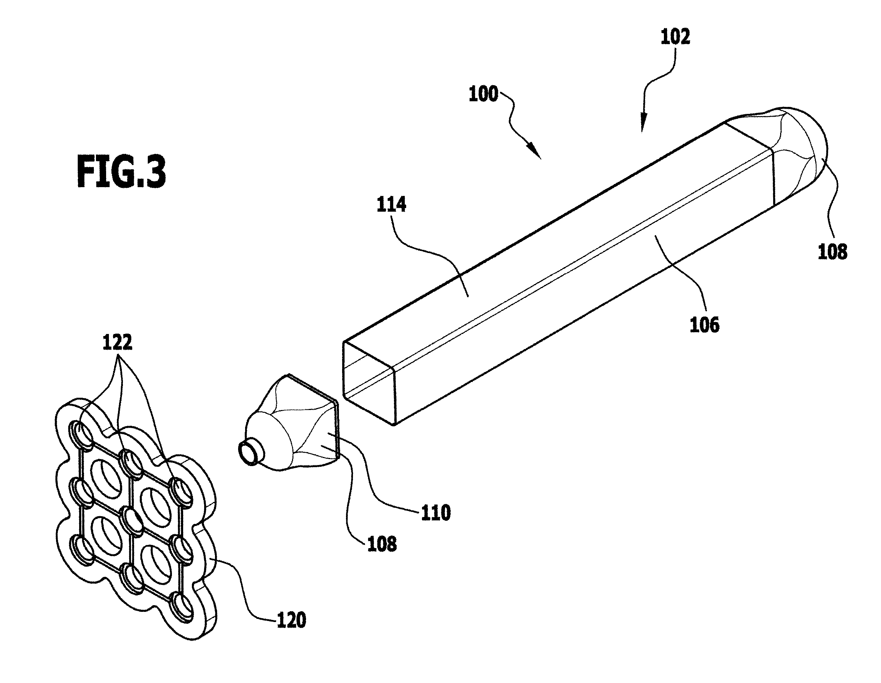

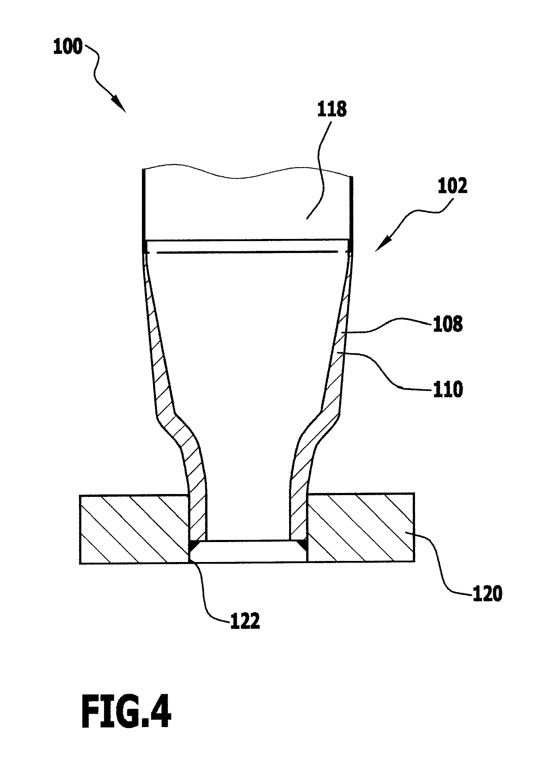

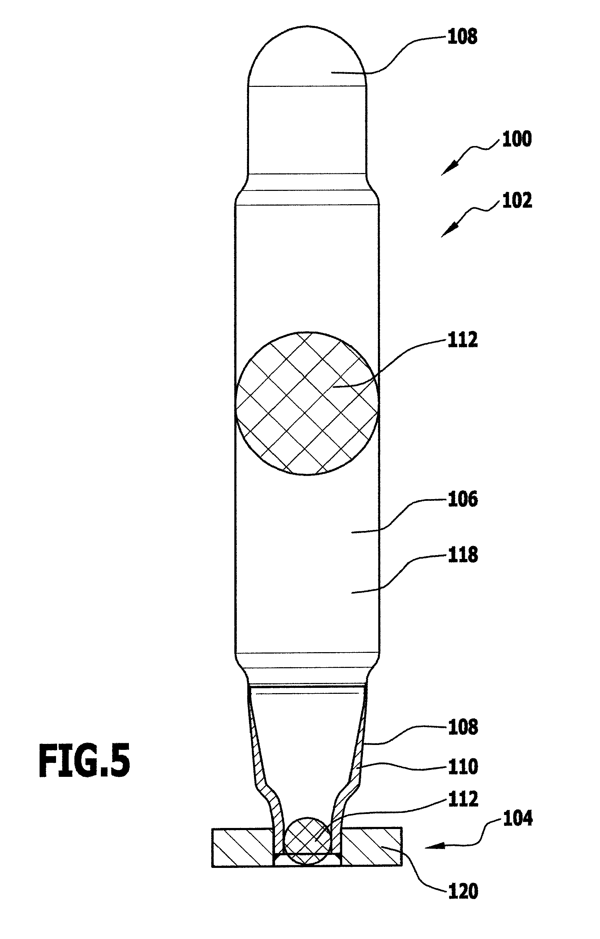

Eine in den Fig. 1 bis 5 dargestellte Ausführungsform einer als Ganzes mit 100 bezeichneten Tankvorrichtung umfasst mehrere, beispielsweise 18, Tankelemente 102, welche mittels einer Adaptervorrichtung 104 miteinander verbunden sind.

Die einzelnen Tankelemente 102 umfassen jeweils einen zentralen hohlzylindrischen Abschnitt 106, welcher zu beiden Seiten mit einer Endkappe 108 versehen ist.

Eine der Endkappen 108 ist als ein Anbindungselement 110 ausgebildet.

Mittels des Anbindungselements 110 kann das Tankelement 102 an der Adaptervorrichtung 104 festgelegt werden.

Das Anbindungselement 110 ist verjüngend ausgebildet, so dass eine Innenquerschnittsfläche 112 an einem dem hohlzylindrischen Abschnitt 106 abgewandten Ende des Anbindungselements 110 kleiner ist als eine Innenquerschnittsfläche 112 im Bereich des hohlzylindrischen Abschnitts 106.

Die Tankelemente 102, insbesondere die hohlzylindrischen Abschnitte 106 der Tankelemente 102 umfassen vorzugsweise eine fluiddichte Innenschale 114, welche zur Verstärkung derselben beispielsweise mit einer faserverstärkten Außenschale 116 umgeben ist.

Insbesondere die fluiddichte Innenschale 114 und die Endkappen 108 sind miteinander verschweißt, um einen Innenraum 118 eines jeden Tankelements 102 fluiddicht zu umgeben. Der Innenraum 118 des Tankelements 102 ist vorzugsweise nur durch das Anbindungselement 110 hindurch zugänglich.

Die Adaptervorrichtung 104 umfasst zwei Adapterplatten 120, welche jeweils neun Öffnungen 122 zur Aufnahme der Anbindungselemente 110 umfassen.

An einer den Tankelementen 102 abgewandten Seite der Adapterplatte 120 sind Verbindungskanäle 124 vorgesehen, mittels welchen die Öffnungen 122 fluidwirksam miteinander verbunden sind.

Die Verbindungskanäle 124 sind beispielsweise durch eine Nut 126 in der den Tankelementen 102 abgewandten Oberfläche der Adapterplatte 120 gebildet.

Zur stabilen Verbindung der Anbindungselemente 110 mit einer Adapterplatte 120 sind die Anbindungselemente 110 mit einer in Richtung der Adapterplatte 120 zunehmenden Materialstärke versehen.

Die Materialstärke eines jeden Anbindungselements 110 ist somit insbesondere in einem Bereich, in welchem das Anbindungselement 110 mit einer Adapterplatte 120 stoffschlüssig verbunden wird, deutlich größer als an einem dem hohlzylindrischen Abschnitt 106 zugewandten Ende des Anbindungselements 110.

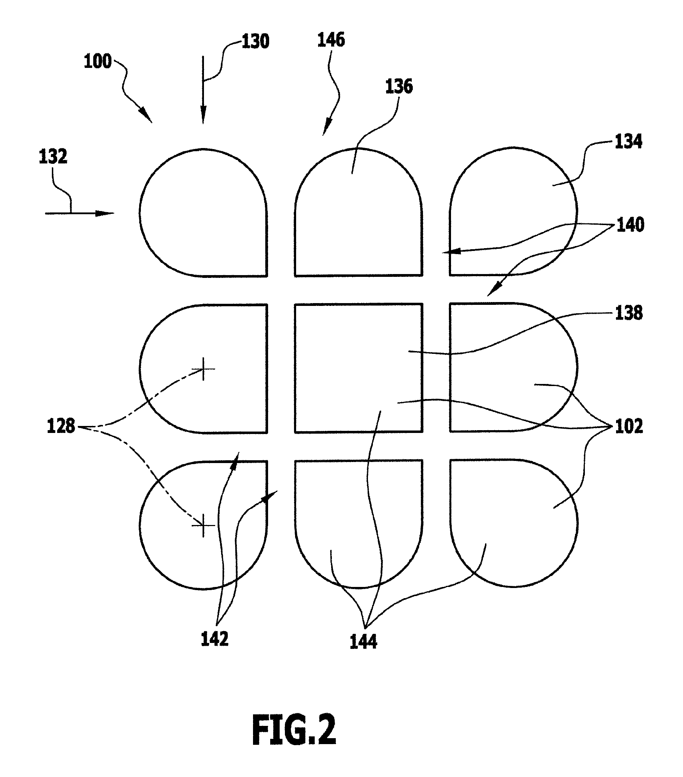

Wie insbesondere Fig. 2 zu entnehmen ist, weisen die Tankelemente 102 nicht alle dieselbe Querschnittsform auf.

Vielmehr sind drei Arten von Tankelementen 102 vorgesehen, insbesondere um einen zur Verfügung stehenden Bauraum mit einem möglichst großen Tankvolumen füllen zu können.

Die Tankelemente 102 sind bezüglich Mittelachsen 128 der hohlzylindrischen Abschnitte 106 parallel zueinander ausgerichtet und im Wesentlichen matrixförmig angeordnet, so dass insbesondere Spalten 130 und Zeilen 132 aus Tankelementen 102 gebildet sind.

Beispielsweise bei der Verwendung von neun nebeneinander angeordneten Tankelementen 102 sind vier als Eckelemente 134 ausgebildete Tankelemente 102, vier als Randelemente 136 ausgebildete Tankelemente 102 und ein als Innenelement 138 ausgebildetes Tankelement 102 vorgesehen.

Eckelemente 134 sind Tankelemente 102, welche sowohl ein Ende einer Spalte 130 als auch ein Ende einer Zeile 132 bilden.

Randelemente 136 sind Tankelemente 102, welche ein Ende einer Zeile 132 oder ein Ende einer Spalte 130 bilden.

Das Innenelement 138 bildet weder ein Ende einer Spalte 130 noch ein Ende einer Zeile 132.

Die Tankelemente 102 sind beabstandet voneinander angeordnet, so dass zwischen den Tankelementen 102 ein kanalartiger Zwischenraum 140 gebildet ist.

Zwischen den Tankelementen 102 kann somit insbesondere mindestens eine Faser hindurchgeführt werden.

Die Tankelemente 102 können somit mittels mindestens einer Faser umwickelt und besonders stabil relativ zueinander festgelegt werden.

Die Zwischenräume 140 sind somit Faserkanäle 142.

Die Tankelemente 102 bilden insbesondere Wickelelemente 144 eines Wickelkerns 146, auf welchen die mindestens eine Faser mittels mindestens einer (nicht dargestellten) Wickelvorrichtung aufwickelbar ist.

Die in den Fig. 1 bis 5 dargestellte Ausführungsform der Tankvorrichtung 100 wird wie folgt hergestellt:
Zunächst werden die Tankelemente 102 separat voneinander durch Verbinden der hohlzylindrischen Abschnitte 106 und der Endkappen 108 hergestellt.

Ferner werden die Adapterplatten 120 der Adaptervorrichtung 104 hergestellt, insbesondere indem die Öffnungen 122 und die als Nuten 126 ausgebildeten Verbindungskanäle 124 eingebracht werden.

In einem nächsten Schritt werden die Tankelemente 102 mit den Anbindungselementen 110 in die Öffnungen 122 der Adapterplatten 120 eingeführt und durch Anbringen einer Schweißverbindung zwischen den Anbindungselementen 110 und den Adapterplatten 120 festgelegt.

Jede Adapterplatte 120 ist dann jeweils einseitig mit jeweils neun Tankelementen 102 versehen.

Zur Fertigstellung der Verbindung sämtlicher 18 Tankelemente 102 miteinander werden die Adapterplatten 120 mit ihren den Tankelementen 102 abgewandten Seiten aneinander angeordnet und fluiddicht miteinander verbunden.

Vor dem Verbinden der Adapterplatten 120 oder nach dem Verbinden der Adapterplatten 120 werden zudem die Tankelemente 102 mittels einer (nicht dargestellten) Wickelvorrichtung mit mindestens einer Faser umwickelt. Die so erhaltene Faserstruktur wird vorzugsweise mit einem aushärtenden Matrixmaterial infiltriert. Auf diese Weise kann eine besonders stabile faserverstärkte Einhausung für sämtliche Tankelemente 102 bereitgestellt werden.

Als Faser für die Umwicklung der Tankelemente 102 kann insbesondere eine Einzelfaser, ein Faserbündel, ein Faden, ein Roving, ein Faserstrang und/oder ein Multifilamentgarn vorgesehen sein.

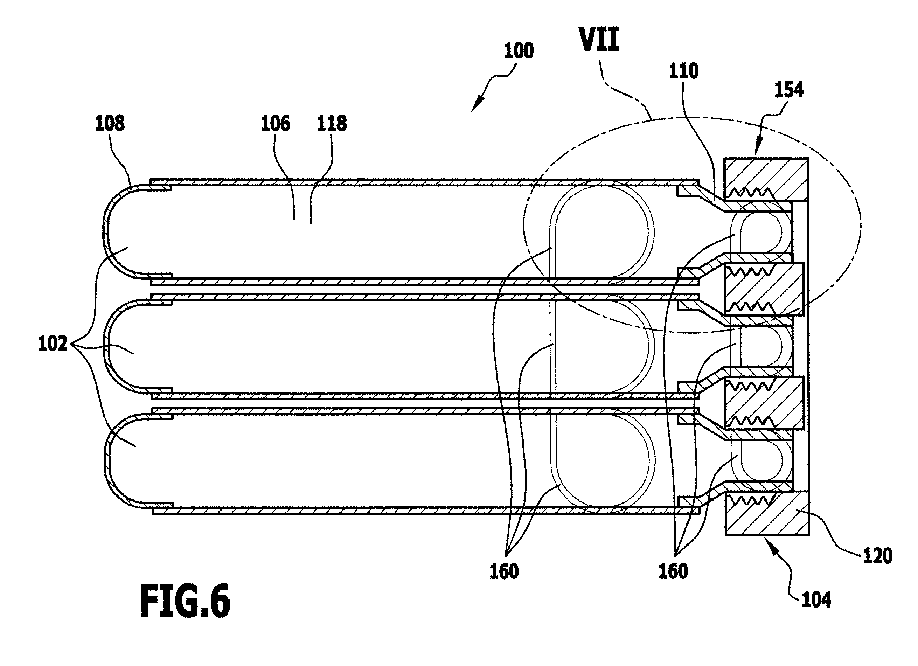

Eine in den Fig. 6 bis 8 dargestellte alternative Ausführungsform einer Tankvorrichtung 100 unterscheidet sich von der in den Fig. 1 bis 5 dargestellten Ausführungsform im Wesentlichen dadurch, dass die Verbindung zwischen den Anbindungselementen 110 und den Adapterplatten 120 nicht mittels eines Schweißverfahrens hergestellt wird.

Vielmehr ist bei der in den Fig. 6 bis 8 dargestellten Ausführungsform eine Umformvorrichtung 148 vorgesehen, mittels welcher die Anbindungselemente 110 formschlüssig und/oder stoffschlüssig mit den Adapterplatten 120 verbindbar sind.

Die Funktionsweise der Umformvorrichtung 148 basiert insbesondere auf der elektromagnetischen Pulsumformtechnologie (EMPT).

Die Umformvorrichtung 148 umfasst ein Expansionselement 150, welches in einer Einführrichtung 151 in die Öffnungen 122 der Adapterplatten 120 einführbar ist.

Das Expansionselement 150 ist insbesondere als eine Expansionsspule ausgebildet.

Mittels des Expansionselements 150 kann insbesondere das ebenfalls in die Öffnung 122 eingeführte Anbindungselement 110 zumindest abschnittsweise expandiert und formschlüssig und/oder stoffschlüssig mit der Adapterplatte 120 verbunden werden.

Das Expansionselement 150 ist hierzu insbesondere in einem Innenraum 152 des Anbindungselements 110 anordenbar, wobei dieser Innenraum 152 einen Überlappungsbereich 154 umfasst, in welchem das Expansionselement 150 in bezüglich der Einführrichtung 151 radialer Richtung zumindest abschnittsweise sowohl von dem Anbindungselement 110 als auch von der Adapterplatte 120 umgeben ist.

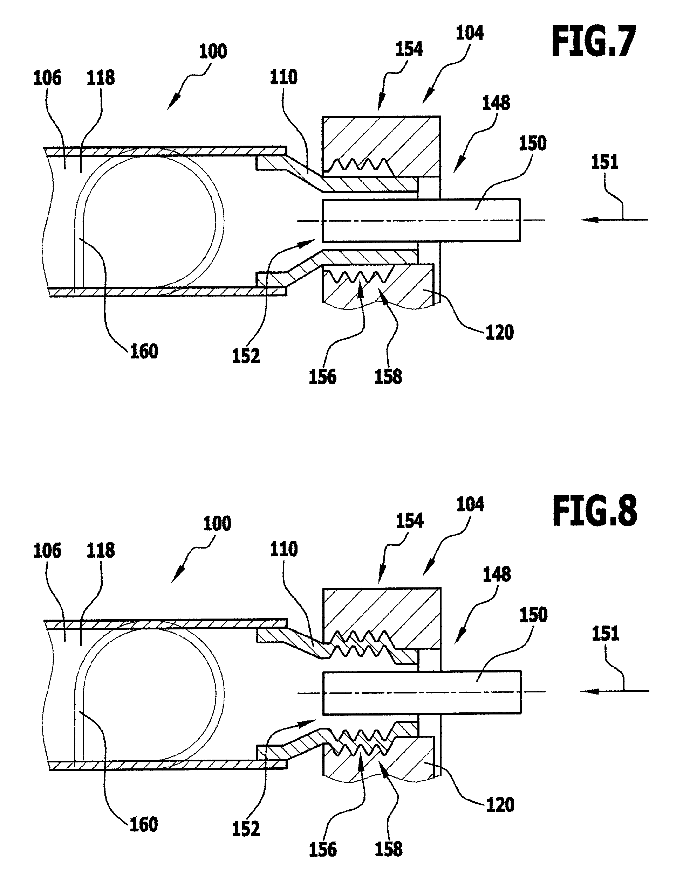

In diesem Überlappungsbereich 154 ist die Adapterplatte 120 insbesondere mit Vorsprüngen 156 und/oder Vertiefungen 158 versehen, so dass durch das Umformen des Anbindungselements 110 und das hieraus resultierende Anformen des Anbindungselements 110 an die Form der Öffnung 122 der Adapterplatte 120 eine besonders stabile Verbindung hergestellt wird (siehe Fig. 8).

Wie insbesondere Fig. 6 zu entnehmen ist, können sowohl die Öffnungen 122 als auch die Anbindungselemente 110 verschiedene Querschnitte 160 aufweisen. Mittels der Umformvorrichtung 148 kann vorzugsweise für jeden Querschnitt 160 eine zuverlässige stoffschlüssige und/oder formschlüssige Verbindung zwischen den Anbindungselementen 110 und den Adapterplatten 120 hergestellt werden.

Ergänzend kann jedoch auch noch ein (nicht dargestelltes) Dichtelement zwischen dem jeweiligen Anbindungselement 110 und der Adapterplatte 120 vorgesehen sein.

Die Verbindung zwischen den Tankelementen 102 und den Adapterplatten 120 wird bei der in den Fig. 6 bis 8 dargestellten Ausführungsform der Tankvorrichtung 100 wie folgt hergestellt:
Jeweils ein Anbindungselement 110 eines Tankelements 102 und das Expansionselement 150 der Umformvorrichtung 148 werden von einander gegenüberliegenden Seiten der Adapterplatte 120 in die vorgesehene Öffnung 122 eingeführt, bis sowohl das Anbindungselement 110 als auch das Expansionselement 150 zumindest abschnittsweise in einem Überlappungsbereich 154 angeordnet ist. Durch Aktivieren der Umformvorrichtung 148 wird das Anbindungselement 110 expandiert und an die Form der Öffnung 122, insbesondere an die Vorsprünge 156 und die Vertiefungen 158, angeformt. Ferner wird hierdurch vorzugsweise eine stoffschlüssige Verbindung zwischen dem Anbindungselement 110 und der Adapterplatte 120 hergestellt.

Nach erfolgtem Verbinden des Anbindungselements 110 und der Adapterplatte 120 wird das Expansionselement 150 entgegen der Einführrichtung 151 aus der Öffnung 122 entnommen und steht zur Verbindung eines weiteren Tankelements 102 mit derselben oder einer anderen Adapterplatte 120 erneut zur Verfügung.

Im Übrigen stimmt die in den Fig. 6 bis 8 dargestellte Ausführungsform einer Tankvorrichtung 100 hinsichtlich Aufbau und Funktion mit der in den Fig. 1 bis 5 dargestellten Ausführungsform überein, so dass auf deren vorstehende Beschreibung insoweit Bezug genommen wird.

### Bezugszeichenliste

- 100: Tankvorrichtung
- 102: Tankelement
- 104: Adaptervorrichtung
- 106: hohlzylindrischer Abschnitt
- 108: Endkappe
- 110: Anbindungselement
- 112: Innenquerschnittsfläche
- 114: fluiddichte Innenschale
- 116: Außenschale
- 118: Innenraum
- 120: Adapterplatte
- 122: Öffnung
- 124: Verbindungskanal
- 126: Nut
- 128: Mittelachse
- 130: Spalte
- 132: Zeile
- 134: Eckelement
- 136: Randelement
- 138: Innenelement
- 140: Zwischenraum
- 142: Faserkanal
- 144: Wickelelement
- 146: Wickelkern
- 148: Umformvorrichtung
- 150: Expansionselement
- 151: Einführrichtung
- 152: Innenraum
- 154: Überlappungsbereich
- 156: Vorsprung
- 158: Vertiefung
- 160: Querschnitt

## Patentansprüche

1. Verfahren zum Verbinden mehrerer Tankelemente (102), umfassend:
- Bereitstellen mehrerer Tankelemente (102), mehrerer Anbindungselemente (110) und einer Adaptervorrichtung (104) zur fluidwirksamen Verbindung von Innenräumen (118) der Tankelemente (102), wobei die Anbindungselemente (110) jeweils eine von zwei Endkappen (108) eines Tankelements (102) bilden;
- Anordnen der Anbindungselemente (110) an der Adaptervorrichtung (104) mittels einer stoffschlüssigen und/oder formschlüssigen Verbindung.

2. Verfahren nach Anspruch 1, **dadurch gekennzeichnet, dass** die Anbindungselemente (110) in Öffnungen (122) der Adaptervorrichtung (104) eingeführt und dann mit der Adaptervorrichtung (104) verbunden werden.

3. Verfahren nach einem der Ansprüche 1 oder 2, **dadurch gekennzeichnet, dass** die Anbindungselemente (110) mit der Adaptervorrichtung (104) verschweißt und/oder durch ein Expansionsumformverfahren, insbesondere ein elektromagnetisches Pulsumformverfahren, mit der Adaptervorrichtung (104) verbunden werden,
wobei vorzugsweise jeweils ein Anbindungselement (110) in jeweils eine Öffnung (122) der Adaptervorrichtung (104) eingeführt wird,
wobei vorzugsweise ein Expansionselement (150) einer Umformvorrichtung (148) in einen Innenraum (152) des Anbindungselements (110) eingeführt wird, so dass das Expansionselement (150) in einem Überlappungsbereich (154) der Adaptervorrichtung (104) und des Anbindungselements (110) bezüglich einer Einführrichtung (151) in radialer Richtung sowohl von dem Anbindungselement (110) als auch von der Adaptervorrichtung (104) umgeben ist, und
wobei vorzugsweise mittels des Expansionselements (150) das Anbindungselement (110) expandiert und hierdurch an der Adaptervorrichtung (104) festgelegt wird.

4. Verfahren nach einem der Ansprüche 1 bis 3, **dadurch gekennzeichnet, dass** sämtliche einer Adapterplatte (120) der Adaptervorrichtung (104) zugeordnete Tankelemente (102) auf einer einzigen Seite der Adapterplatte (120) der Adaptervorrichtung (104) angeordnet werden, wobei vorzugsweise zwei Adapterplatten (120) der Adaptervorrichtung (104) jeweils einseitig mit mehreren Tankelementen (102) versehen werden und wobei vorzugsweise die Adapterplatten (120) an ihren den Tankelementen (102) abgewandten Seiten miteinander verbunden werden.

5. Verfahren nach einem der Ansprüche 1 bis 4, **dadurch gekennzeichnet, dass** die Tankelemente (102) auf einander gegenüberliegenden Seiten der Adaptervorrichtung (104) angeordnet werden.

6. Verfahren nach einem der Ansprüche 1 bis 5, **dadurch gekennzeichnet, dass** die Tankelemente (102) jeweils bereitgestellt werden durch:
- Bereitstellen eines hohlzylindrischen Abschnitts (106) und zweier Endkappen (108), wobei eine Endkappe (108) als ein Anbindungselement (110) ausgebildet ist;
- Verbinden, insbesondere Verschweißen, des hohlzylindrischen Abschnitts (106), der Endkappe (108) und des Anbindungselements (110) miteinander.

7. Verfahren nach Anspruch 6, **dadurch gekennzeichnet, dass** der hohlzylindrische Abschnitt (106), die Endkappe (108) und/oder das Anbindungselement (110) nach dem Verbinden derselben miteinander mit einem Fasermaterial umgeben, insbesondere umflochten und/oder umwickelt, werden.

8. Verfahren nach Anspruch 7, **dadurch gekennzeichnet, dass** das Fasermaterial mit einem Matrixmaterial versehen, insbesondere benetzt und/oder getränkt, wird.

9. Verfahren nach einem der Ansprüche 1 bis 8, **dadurch gekennzeichnet, dass** die Tankelemente (102) derart nebeneinander angeordnet werden, dass die Mittelachsen (128) von hohlzylindrischen Abschnitten (106) der Tankelemente (102) im Wesentlichen parallel zueinander sind.

10. Verfahren nach einem der Ansprüche 1 bis 9, **dadurch gekennzeichnet, dass** die mittels der Adaptervorrichtung (104) miteinander verbundenen Tankelemente (102) Wickelelemente (144) eines Wickelkerns (146) bilden, welche mittels einer Wickelvorrichtung mit mindestens einer Faser umwickelt werden, wobei die mindestens eine Faser zum Umwickeln der Tankelemente (102) vorzugsweise zwischen den Tankelementen (102) hindurch- und/oder um die Tankelemente (102) herumgeführt wird.

11. Tankvorrichtung (100), umfassend mehrere Tankelemente (102), mehrere Anbindungselemente (110) und eine Adaptervorrichtung (104) zur fluidwirksamen Verbindung von Innenräumen (118) der Tankelemente (102), wobei die Anbindungselemente (110) jeweils eine von zwei Endkappen (108) eines Tankelements (102) bilden und mittels einer stoffschlüssigen und/oder formschlüssigen Verbindung an der Adaptervorrichtung (104) angeordnet sind.

12. Tankvorrichtung (102) nach Anspruch 11, **dadurch gekennzeichnet, dass** die Anbindungselemente (110) die Innenräume (118) der Tankelemente (102) mit Verbindungskanälen (124) der Adaptervorrichtung (104) fluidwirksam verbinden.

13. Tankvorrichtung (102) nach einem der Ansprüche 11 oder 12, **dadurch gekennzeichnet, dass** die Anbindungselemente (110) eine variierende Materialstärke aufweisen, wobei die Materialstärke an einem der Adaptervorrichtung (104) zugewandten Ende der Anbindungselemente (110) größer oder stärker ist als die Materialstärke an einem der Adaptervorrichtung (104) abgewandten Ende der Anbindungselemente (110).

14. Tankvorrichtung (102) nach einem der Ansprüche 11 bis 13, **dadurch gekennzeichnet, dass** die hohlzylindrischen Abschnitte (106) eine fluiddichte Innenschale (114) und eine faserverstärkte Außenschale (116) umfassen.

15. Tankvorrichtung (102) nach einem der Ansprüche 11 bis 14, **dadurch gekennzeichnet, dass** ein Abschnitt mindestens eines Anbindungselements (110), in welchem dieses an der Adaptervorrichtung (104) angeordnet ist, verjüngt ausgebildet ist.
